# EUROPEAN PATENT APPLICATION

(11) **EP 1 922 916 A1**
(43) Date of publication of application: **21.05.2008**
(21) Application number: 07120693.2
(22) Date of filing: 14.11.2007
(51) Int. Cl.: A01G 3/08, B27B 17/08, B27B 17/00

(54) **A tool-holder head for a pole saw and pole saw thereof**

(30) Priority: 15.11.2006 IT BO20060096 U
(71) Applicant: Upward S.r.l., 41011 Campogalliano (IT)
(72) Inventor: Giovanardi, Gian Andrea, 41100, MODENA (IT)
(74) Representative: Jorio, Paolo

(57) **Abstract**

In a pole saw of the type provided with a motor (2), a tool-holder head (3), a tubular arm (4) supporting the tool-holder head (3), and a transmission shaft (11) installed inside the arm (4) and angularly integral with the drive shaft of the motor (2), the tool-holder head (3) presents a protective casing (6,7), in which there is installed a bevel gear pair (13), and is provided with a first adapter element (20) to make a first hub (14) of the bevel gear pair (13) integral with the transmission shaft (11), and a second adapter element (28), by means of which a first tubular portion (24) of the protective casing (6,7) is fitted onto an end of the arm (4).

## Description

The present invention relates to a tool-holder head for a pole saw.

As known, a pole saw is a garden machine for pruning trees and cutting small trunks and typically comprises a motor, a tool-holder head and an arm, which comprises a first axial end connected to the case of the motor and a second axial end supporting the mentioned tool-holder head. The motor transmits the motion to the tool by means of a transmission shaft accommodated in the arm and by means of a bevel gear pair installed in the head and kinematically coupled to the transmission shaft itself. The bevel gear pair comprises a hub internally engaged with an axial end of the transmission shaft and presenting, on one axial end, a first bevel gear wheel; and a second bevel gear wheel meshed with the first and keyed onto a shaft on which the tool is mounted. The head comprises a protective casing fixed to the aforesaid arm. The tool consists of a chain bar of the type fitted on chain saws.

There are many manufactures of pole saws in the world and each one makes several different pole saw models. This means that each manufacturer makes a different bevel gear pair, a different coupling between the head casing and the aforesaid arm, and several other different constructive details for each pole saw model. In brief, there is a high number of reciprocally different pole saw heads on the market.

It is worth noting that the bevel gear pair is the part of the pole saw most subject to wear and the single spare parts of the components of the bevel gear pair are very expensive. For such reasons, it is normal practice to replace the head after a predetermined period of use.

In other words, the user is forced to purchase a new genuine product and the retailer is forced to constantly stock a plurality of heads for each model of the various manufacturers, with understandable increase in costs.

It is the object of the present invention to make a tool-holder head for pole saw which is free from the mentioned drawbacks, i.e. which contemplates appropriate contrivances which allow its use on a plurality of pole saws of different model from different manufacturers.

According to the present invention, a tool-holder head for a pole saw and a pole saw thereof according to the attached claims are made.

For a better understanding of the present invention, a preferred embodiment will now be described only by way of non-limitative example, and with reference to the accompanying drawings, in which:
- figures 1a and 1b show two side views of a pole saw according to the present invention;
- figure 2 shows a section view of a tool-holder head of the pole saw in figure 1a along line A-A;
- figure 3 shows a top view of the tool-holder head;
- figure 4 shows a section view of the tool-holder head taken along line B-B shown in figure 3; and
- figure 5 shows a section view of the tool-holder head taken along line C-C shown in figure 3.

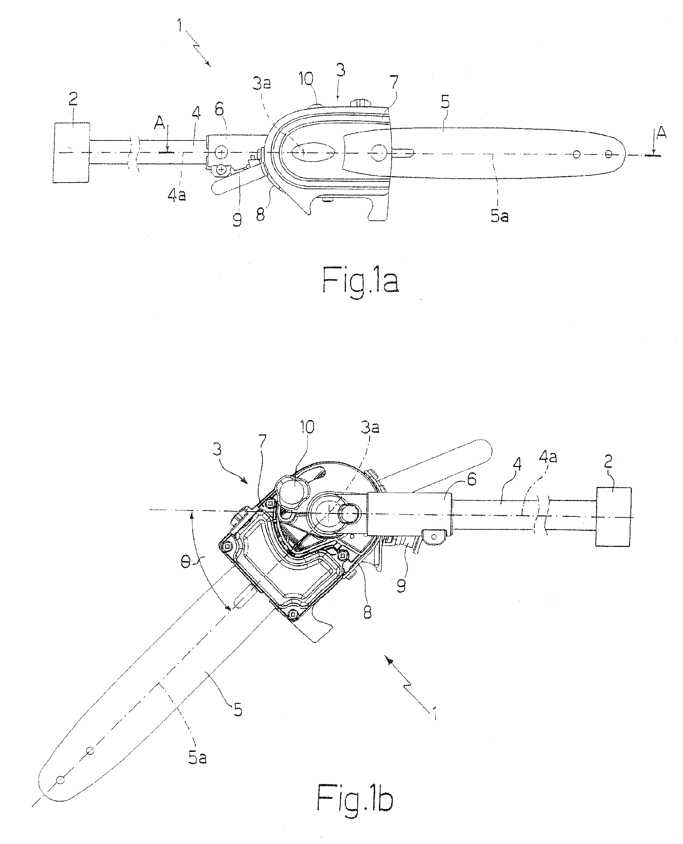

In figure 1a, numeral 1 generically indicates, as a whole, a pole saw comprising a motor 2; a tool-holder head 3 presenting a main axis 3a perpendicular to the plane of the drawing shown in figure 1a; and a tubular arm 4 which is developed along an axis 4a orthogonal to axis 3a and has a first axial end connected (in manner not shown because of known type) to the case of the motor 2 and a second axial end supporting the mentioned head 3. On the head 3 there is mounted a cutting tool made, for example, of a chain bar 5 of known type, which comprises a guiding bar presenting a symmetry axis 5a orthogonal to the axis 3a and a chain saw (not shown) wound about the guiding bar itself. Specifically, the head 3 comprises a first protective casing 6 fixed to the arm 4 and a second protective casing 7, which supports the chain bar 5 and is coupled to the first casing 6 so as to turn about axis 3a, with respect to the first casing 6.

Specifically, as shown better in figure 1b, which shows a view of the pole saw 1 from the opposite side of that shown in figure 1a, the rotation of the second casing 7 about the axis 3a makes the projection of the axes 4a and 5a on a plane orthogonal to the axis 3a, and coinciding with the plane of the side view itself, define an inclination angle θ of the chain bar 5 with respect to the arm 4. As shown in both figures 1a and 1b, the head 3 comprises adjustment means 8, 9, 10 for allowing the adjustment of such inclination angle θ.

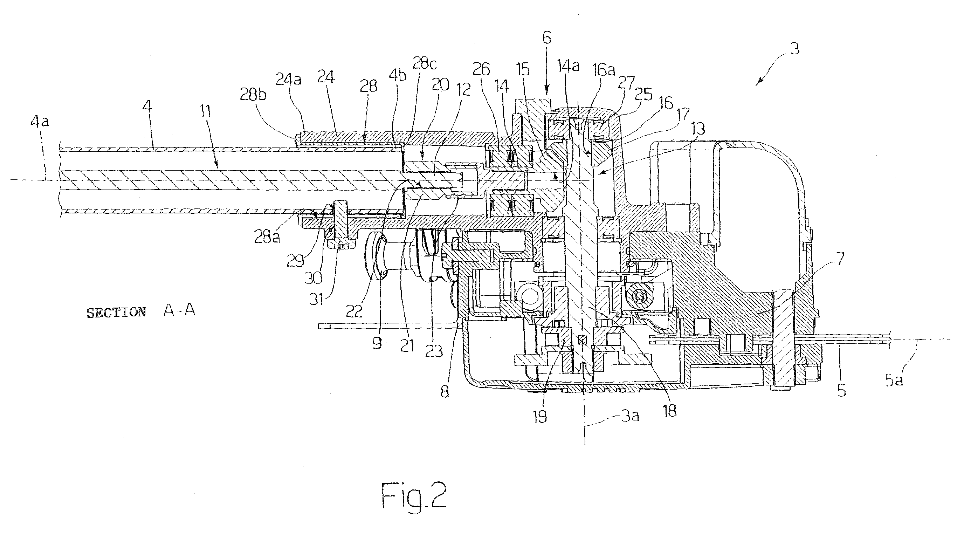

Figure 2 shows a section view of the head 3 taken along the line A-A shown in figure 1a. With reference to such figure 2, in the arm 4 there is coaxially installed a first transmission shaft 11 which, on one first axial end, is angularly integral (in manner not shown because of known type) with a drive shaft (not shown) of the motor 2, and which, on the other axial end, presents an end portion 12 extending outwards from the arm 4. The end portion 12 is externally grooved, i.e. presents either a radial tooth section or presents a transverse polygonal shaped section.

As shown in figure 2, the head 3 comprises a bevel gear pair 13, which is accommodated in the first casing 6 and comprises a first hub 14 coaxial with the transmission shaft 11 and on which a first bevel gear wheel 15 is made, and a second hub 16 rotating about the axis 3a and on which a second bevel gear wheel 17 meshing with the first bevel gear wheel 15 is made. The longitudinal axes of the hubs 14 and 16 define an angle essentially equal to 90°. The first hub 14 presents an axial through hole 14a and presents a threaded segment at one of its first axial ends. The first bevel gear wheel 15 is made at the other axial end of the hole 14a. The second hub 16 presents an axial through hole 16a, at which such hub 16 is coaxial and angularly integral with a second transmission shaft 18 adapted to transmit the motion to the above-mentioned chain saw (not shown). Specifically, such transmission shaft 18 presents a first part accommodated in the first casing 6 and onto which the second hub 16 is keyed, and a second part accommodated in the second casing 7 onto which a second bevel gear wheel 19 also accommodated in the second casing 7 is keyed; the bevel gear wheel 19 being wound by said chain saw.

Again with reference to figure 2, the head 3 comprises a first adapter element 20 adapted to make the first hub 14 angularly integral with the first transmission shaft 11. Specifically, the adapter element 20 presents a first portion 21, in which there is made a blank hole 22 grooved or shaped to be engaged with the end portion 12 of the transmission shaft 11, and a second portion 23, which is externally threaded and fastened into the threaded segment of the hole 14a of the first hub 14. Naturally, the engagement of the terminal portion 12 in the blade hole 22 may be determined by other systems, such as for example a key connection. The portions 21 and 23 of the adapter element 20 shown in figure 2 belong to two corresponding pieces conveniently made separately and then joined, e.g. by means of welding, to form the adapter element 20 itself. Similarly, the adapter element 20 may be made integrally in one piece incorporating the two portions 21 and 23.

With reference again to figure 2, the first casing 6 comprises two tubular portions 24 and 25 made in one piece. Specifically, the first tubular portion 24 accommodates within, coaxially and by means of first pair of bearings 26, the first hub 14. The second tubular portion 25 instead accommodates inside, coaxially and by means of a second pair of bearings 27, the second hub 16 and a considerable part of the second transmission shaft 18. Furthermore, the first tubular potion 24 coaxially accommodates also the adapter element 20 and is fixed to the aforesaid second axial end of the arm 4 by means of a second adapter element 28.

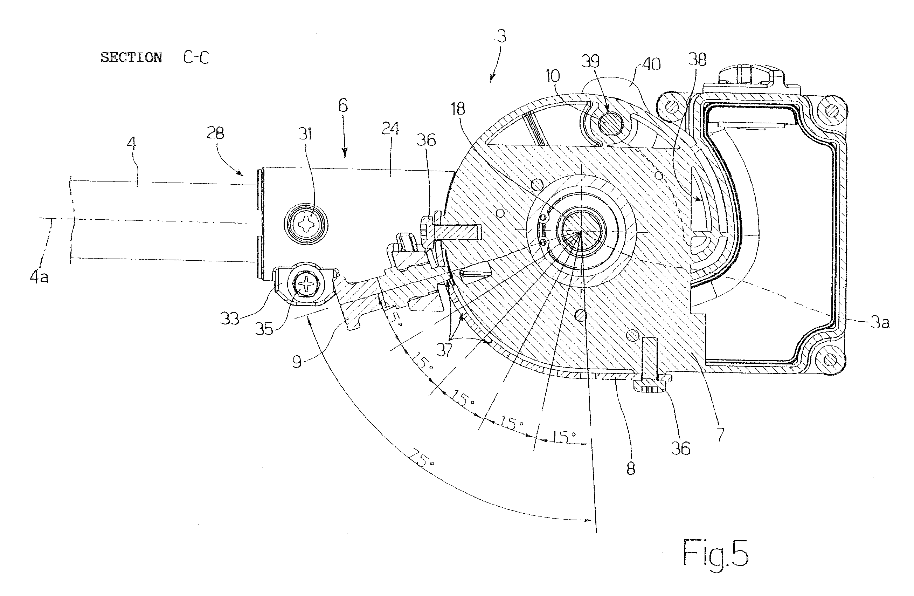

In detail, the second adapter element 28 consists of a second tubular element opened along the side by a longitudinal cut 28a (also see figure 5) and adapted to be fitted on the mentioned second axial end of the arm 4. The tubular element presents, on a first axial end, an edge folded outwards so as to create a first crown 28b on which an edge 24a abuts of an axial end of the first tubular portion 24 of the first casing 6; and, on a second axial end, an edge folded inwards so as to create a second crown 28c which abuts on an edge 4b of the second axial end of the arm 4. In other words, the first tubular portion 24 is fitted coaxially onto the mentioned second axial end of the arm 4 by means of the second adapter element 28.

In the second axial end of the arm 4, there is typically made at a predetermined distance from the edge 4b, a through hole 29 in which the axis is transversal to the axis 4a. In order to avoid the reciprocal axial and angular sliding between the first tubular portion 24 and the arm 4, a through threaded hole 30 coaxial to the hole 29 is made in the first tubular portion 24, and a screw 31 is screwed into the threaded hole 30 to cross the longitudinal cut 28a of the adapter element 28 so as to engage the hole 29 in the arm 4.

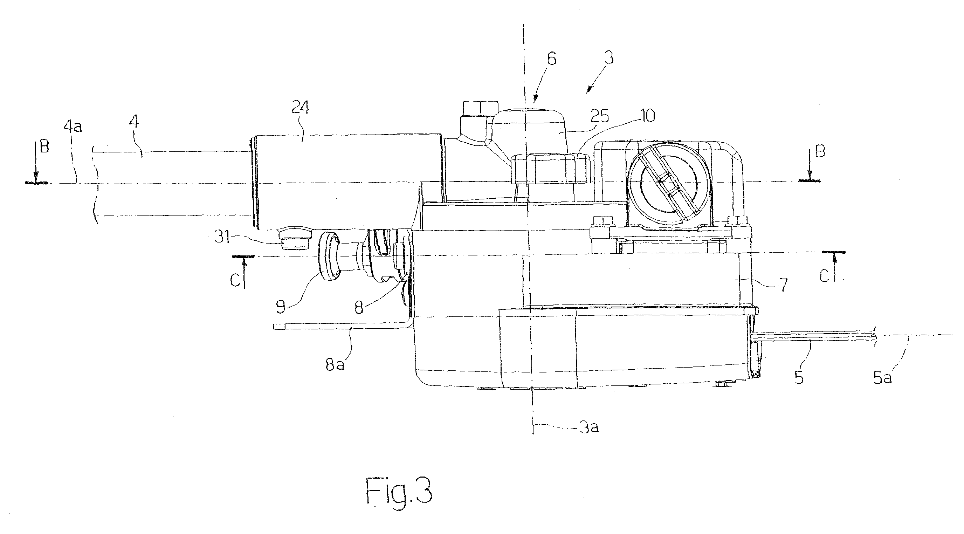

The figure 3 shows a top view, parallelly to axis 4a of the head 3 only and indicates further lines B-B and C-C along which the corresponding section views of the head 3 shown in the following figures are defined.

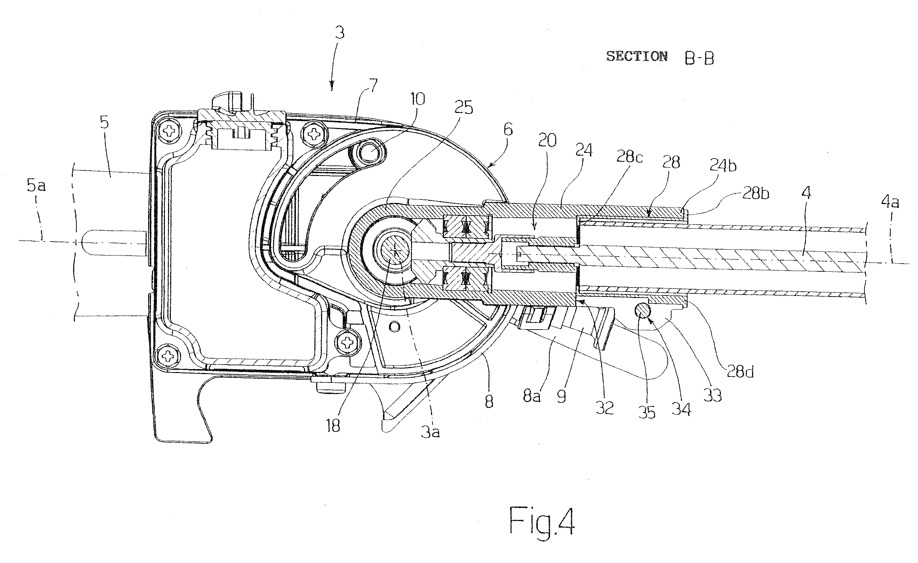

With reference to figure 4, which shows a section view of the head 3 along the line B-B, the tubular portion 24 presents a longitudinal slot 32 open to the edge 24a. Two elastically deformable protrusions 33 (only one of which is shown in figure 4) project outwards in reciprocally parallel manner from the two edges facing the slot 32, in each of which protrusion there is made a through hole 34 the axis of which is skew with respect to the axis 4a. One of the holes 34 is threaded and is provided with a screw 35 which crosses the non-threaded hole 34 and is screwed into the threaded hole 34 so as to clamp the two protrusions 33 against each other, thus making an effective locking of the first tubular portion 24 on the arm 4. The second adapter element 28, furthermore, presents a fin 28d which projets out through the slot 32 into the space between the protrusions 33 to act as reference element for the assembly of the adapter element 28 itself.

With reference to figure 5, the aforesaid adjustment means 8, 9, 10 comprise a plate 8 folded as an arc of a circle centered on the axis 3a and ensured, by means of screws 36, onto the second casing 7, in which plate there are obtained, at a reciprocally regular angular distance, a series of through holes 37 the axes of which are radial with respect to the axis 3a; and a spring shutter 9 of the known type mounted on the first casing 6 and adapted to axially engage, under the bias of the spring (not shown), one of the holes 37 to define in such a manner a corresponding value of the inclination angle θ. In the example shown in figure 5, the holes 37 define an adjustment range of the inclination angle θ from a minimum value of 0° to a maximum value of 75° with adjustment steps of 15°.

The means 8, 9, 10 for adjusting the inclination angle further comprise a fastening element 10 consisting essentially of a screw, which crosses a slot 38 obtained in the first casing 6 and is fastened parallelly to the axis 3a, in a threaded hole 39 obtained in the second casing 7 so as to fasten the second casing 7 against the first casing 6 at a required value of the inclination angle θ which is determined by the position of the shutter 9 on the plate 8. In detail, the slot 38 is obtained in a wall of the first casing 6 essentially orthogonal to the axis 3a and extends along an arc of a circle centered on the axis 3a. A knob 40 for facilitating the fastening of the two casings 6 and 7 is integrally made on the head of the screw.

Furthermore, figures 3 and 4 show that a L-shaped bracket originates from the edge of the plate 8 and ends with an oblong end 8a radially facing outwards and having the function of lever to facilitate the rotation, about the axis 3a, of the second casing 7 with respect to the first casing 6.

The adjustment of the inclination angle θ occurs in use by unscrewing the fastening element 10 to loosen the two casings 6 and 7, pulling the shutter 9 against the bias of its own spring, pulling the end 8a towards the arm 4 to turn the second casing 7 until the axis of the shutter 9 is aligned with the axis of the hole 37 corresponding to the required value of the inclination angle θ, releasing the shutter 9 and screwing back the fastening element 10.

From the above description, the advantages obtained by implementing the present invention are apparent and numerous. Specifically, a universal type head 3 is made because it is installable on any pole saw 1 by means of two adapter elements 20 and 28 which are, as seen, of simple construction and low manufacturing cost. Indeed, every model of pole saw 1 differs from the other models essentially for the different transverse shaping of the end portion 12 of the first transmission shaft 11 and for the different external diameter of the arm 4. It is now possible to contemplate a plurality of adapter elements 20 which reciprocally differ only for the different transverse shape of the blank hole 22 and the plurality of adapter elements 28 which reciprocally differ only for the internal diameter. In brief, the retailer may stock a plurality of universal heads 3 and a plurality of adapter elements 20 and 28 which allow the use of the universal head 3 on any model of pole saw 1, with a considerable reduction of storage costs which positively reflects on the costs that the user needs to sustain.

## Claims

1. A tool-holder head for a pole saw of the type comprising a motor (2); a tubular arm (4), which presents a first axial end connected to a case of the motor (2) and a second axial end adapted to support the tool-holder head (3); and a first transmission shaft (11) installed inside said arm (4) and angularly integral with a drive shaft of the motor (2); on the tool-holder head (3) being mounted a cutting tool (5); the tool-holder head (3) comprising a bevel gear pair (13) defined by a first hub (14), which is coaxial to the first transmission shaft (11) and presents a first bevel gear wheel (15), and a second hub (16), which presents a second bevel gear wheel (17) meshing with the first bevel gear wheel (15); and a second transmission shaft (18) angularly integral with the second hub (16) to transmit the motion to the cutting tool (5); the tool-holder head (3) being **characterized in that** it comprises a first adapter element (20) to make said first hub (14) and said first transmission shaft (11) angularly and reciprocally integral.

2. A tool-holder head according to claim 1, wherein said in first hub (14) there is made an axial hole (14a) presenting a threaded segment; said first adapter element (20) comprising a first portion (21), in which a hole (22) engaged by a terminal portion (12) of said first transmission shaft (11) is made, and a second externally threaded portion (23) screwed into the threaded segment of the hole (14a).

3. A tool-holder head according to claim 1 or 2, and comprising a protective casing (6), which presents a tubular portion (24) accommodating said first hub (14) and said first adapter element (20) coaxially therein; and a second adapter element (28), by means of which the tubular portion (24) is adapted to be fitted on said second axial end of said arm (4).

4. A tool-holder head according to claim 3, wherein said second adapter element (28) presents a tubular conformation.

5. A tool-holder head according to claim 4, wherein said second adapter element (28) presents, on a first axial end thereof, an edge folded outwards so as to create a first crown (28b), on which an edge (24a) of said tubular portion (24) abuts, and presents, on a second axial end, an edge folded inwards so as to create a second crown (28c) adapted to abut on an edge (4b) of said second axial end of said arm (4).

6. A tool-holder head according to one of claims from 3 to 5, wherein said tubular portion (24) of said protective casing (6) presents a longitudinal slot (32); from two edges facing the slot (32) two protrusions (33) projet outwards reciprocally parallel in which corresponding through holes (34), one of which threaded, are made; a screw (35) crossing the non-threaded hole (34) and being screwed into the threaded hole (34) to clamp the two protrusions (33) so as to lock the tubular portion (24) onto said second axial end of said arm (4).

7. A tool-holder head according to claim 6, wherein said second adapter element (28) presents a fin (28d) which projets out through said slot (32), into the space between said protrusions (33); the fin (28d) remaining fastened between the protrusions (33).

8. A tool-holder head according to claims from 3 to 7, wherein a through hole (29) is made in said second end of said arm (4); said second adapter element (28) being laterally opened by a longitudinal cut (28a) and on said tubular portion (24) there being made a threaded through hole (30) adapted to be arranged coaxially to the hole (29) in the arm (4); a screw (31) being fastened to the threaded hole (30) to cross the cut (28a) of the second adapter element (28) to engage the hole (29) in the arm (4) so as to avoid the reciprocal axial and angular slipping between the tubular portion (24) and the arm (4).

9. A tool-holder head according to one of the claims from 1 to 8, wherein said first transmission shaft (11) turns about a first rotation axis (4a) and the second transmission shaft (18) turns about a second rotation axis (3a) orthogonal to the first rotation axis (4a); said second cutting tool (5) being mounted on the tool-holder head (3) with a symmetry axis (5a) thereof orthogonal to the second rotation axis (3a); respective projections of the first rotation axis (4a) and of the symmetry axis (5a) on a plane orthogonal to the second rotation axis (3a) defining an inclination angle (θ); the tool-holder head (3) comprising a first protective casing (6) fixed to the arm (4); a second protective casing (7), which supports the cutting tool (5) and is coupled to the first protective casing (6) so as to be able to turn about the second axis (3a), with respect to the first protective casing (6) itself; and adjustment means (8, 9, 10) to allow the adjustment of such inclination angle (θ).

10. A tool-holder head according to claim 9, wherein said adjustment means (8, 9, 10) comprise a plate (8) folded as an arc of a circle centered on said second axis (3a) and fixed onto the second protective casing (7), in which plate (8) there are obtained, at a reciprocally regular distance, a series of through holes (37) the axes of which are radial with respect to the second axis (3a); and a spring shutter (9) mounted on the first protective casing (6) and adapted to axially engage, under the bias of its spring, one of the holes (37) in the plate (8) to define in such manner a corresponding value of the inclination angle (θ).

11. A tool-holder head according to claim 10, wherein said adjustment means (8, 9, 10) comprise fastening means (10) for fastening said first protective casing (6) against said second protective casing (7) at said value of said inclination angle (θ).

12. A tool-holder head according to claim 11, wherein said first protective casing (6) presents a wall essentially orthogonal to said second axis (3a), in which wall there is made a slot (38) extending along an arc of a circle centered on the second axis (3a) itself, and in said second protective casing (7) there is made a threaded hole (39), the axis of which is parallel to the second axis (3a); said fastening means comprising a screw (10) which crosses the slot (38) and is screwed into the threaded hole (39).

13. A pole saw of the type comprising a motor (2); a tool-holder head (3), on which there is mounted a cutting tool (5); a tubular arm (4), which presents a first axial end connected to a case of the motor (2) and a second axial end supporting the tool-holder head (3); a first transmission shaft (11) is installed inside said arm (4) and angularly integral with a drive shaft of the motor (2); and **characterized in that** the tool-holder head (3) is of the type claimed in any of the preceding claims.
